# EUROPÄISCHE PATENTSCHRIFT

(11) **EP 1 776 746 B1**
(45) Veröffentlichungstag und Bekanntmachung des Hinweises auf die Patenterteilung: **02.01.2008**
(21) Anmeldenummer: 05770223.5
(22) Anmeldetag: 05.08.2005
(51) Int. Cl.: H02G 3/04, B60R 16/02, C08L 23/02, C09J 7/02, C09J 7/04

(54) **VERWENDUNG VON VERNETZTER KAUTSCHUKMASSE**
USE OF CROSS-LINKED RUBBER MASSES
UTILISATION DE MASSES DE CAOUTCHOUC RETICULEES

(30) Priorität: 09.08.2004 DE 102004038776
(43) Veröffentlichungstag der Anmeldung: 25.04.2007
(73) Patentinhaber: certoplast Vorwerk & Sohn GmbH, 42285 Wuppertal (DE)
(72) Erfinder: MUNDT, Stefan, 40789 Monheim am Rhein (DE); RAMBUSCH, Peter, 42115 Wuppertal (DE)
(74) Vertreter: Nunnenkamp, Jörg
(86) Internationale Anmeldenummer: PCT/EP2005/008523
(87) Internationale Veröffentlichungsnummer: WO 2006/015816

(56) Entgegenhaltungen:
- EP-A- 0 942 057
- EP-A- 1 136 535
- WO-A-02/14446
- WO-A-03/033611
- US-A1- 2003 065 048
- US-A1- 2003 199 604
- US-B1- 6 541 553

## Beschreibung

Die Erfindung betrifft die Verwendung von vernetzter Kautschukmasse als ein- oder beidseitige Haftkleberbeschichtung auf einem bandförmigen Träger im Zuge der Herstellung eines Selbstklebebandes zur Bündelung von Kabeln in Kraftfahrzeugen.

Ein Selbstklebeband bezeichnet nach üblichem Sprachgebrauch ein Klebeband, das ein- oder beidseitig mit einer Haftkleberbeschichtung ausgerüstet ist. Ein solcher Haftkleber zeichnet sich durch eine permanent klebrige Filmschicht aus. Diese permanent klebrige Filmschicht bildet sich nach dem Verdunsten einer flüssigen Phase einer Lösung oder Dispersion oder nach dem Erkalten einer Schmelze. Im erstgenannten Fall wird der Kleber bzw. die Klebemasse als Lösung respektive Dispersion auf den bandförmigen Träger aufgebracht und hinterlässt nach dem Verdunsten des Lösungsmittels den beschriebenen Film. Gleiches gilt für den Fall, dass der Kleber bzw. die Klebemasse für den Auftrag auf dem bandförmigen Träger zur Erniedrigung der Viskosität erhitzt wird und dann nach dem Erkalten den klebrigen Film bildet.

In der EP 0 937 761 B1 wird ein Selbstklebeband beschrieben, welches zur Ummantelung von Kabeln in Automobilen geeignet ist. Hier kommt eine Klebemasse auf Acryl-Hot-Melt-Basis zum Einsatz, die sich strahlenchemisch vernetzen lässt.

Daneben ist es durch die US-PS 5 681 654 bekannt geworden, eine Kautschukmasse als Haftkleberbeschichtung auf einen bandförmigen Träger im Zuge der Herstellung eines Selbstklebebandes aufzubringen. Ob und wie eine Vernetzung im Einzelnen vorgenommen wird, bleibt offen.

Klebemassen auf Acrylat-Hot-Melt-Basis werden bevorzugt für die Herstellung von Selbstklebebändern zur Ummantelung von Kabeln in Automobilen bzw. Kraftfahrzeugen eingesetzt, weil sie über eine gute Alterungsbeständigkeit und Temperaturstabilität verfügen. So kommt es bei den beschriebenen automobilen Anwendungen durchaus zu Temperaturen von bis zu 125 °C und mehr, die von kautschukbasierten Haftklebemassen nicht ohne erheblichen technischen und wirtschaftlichen Aufwand beherrscht werden. Das lässt sich darauf zurückführen, dass Kautschuke bei höheren Temperaturen und/oder unter dem Einfluss deformierender Kräfte ein viskoses Fließverhalten zeigen. Dafür überzeugen Kautschukmassen durch die Möglichkeit einer kostengünstigen Herstellung.

Gleichzeitig entfalten kautschukbasierte Haftklebemassen im Vergleich zu acrylbasierten Haftklebstoffen eine hohe Soforthaftung und überzeugen durch eine schnelle Entfaltung ihrer maximalen Klebkräfte. Dadurch wird eine sichere Verarbeitung gerade im Bereich der Anwendung der Kabelsatzbündelung in Kraftfahrzeugen prädestiniert.

Der im Großen und Ganzen gattungsbildende Stand der Technik nach der DE 198 46 901 A1 beschäftigt sich mit einem Verfahren zur Herstellung von Klebebändern, wobei einseitig mit einer Klebemasse beschichtete Klebebändern einer strahlenchemischen Vernetzung unterworfen werden. Als Klebemassen werden unter anderem Naturkautschuksysteme angesprochen. Insgesamt soll die Bestrahlung des Klebebandes durch das Trägermaterial des Klebebandes auf die Klebemasse derart erfolgen, dass das Trägermaterial.und die dem Trägermaterial zugewandte Klebemasse eine Dosis von 30 bis 200 kGy erhalten. Die bekannte Vorgehensweise greift auf die sogenannte Elektronenstrahlvernetzung zurück. Dabei werden chemische Vernetzungsmittel nicht zugegeben. Aufgrund der hochenergetischen Elektronenstrahlung stellt diese Vernetzungsmethode besondere Ansprüche an den Arbeitsschutz und ist folglich relativ kostenintensiv, was die benötigten Anlagen etc., angeht.

Insgesamt will man durch die beschriebene hohe Strahlendosis bei der DE 198 46 901 A1 eine intensive Vernetzung der Klebemassenschicht auf der dem Träger zugewandten Seite erreichen und verhindern, dass Klebemassenbestandteile auf die offene Trägerseite migrieren können. Aufgrund der kostenintensiven Elektronenstrahlquelle und im Hinblick auf den enormen Kostendruck bei der Herstellung solcher Selbstklebebänder sind solche Elektronenstrahlquellen zum Einsatz in der Automobilindustrie praktisch ungeeignet.

Der Erfindung liegt das technische Problem zugrunde, ein Selbstklebeband anzugeben, welches sich kostengünstig herstellen lässt und für den Einsatzzweck in der Automobilherstellung besonders geeignet ist.

Zur Lösung dieser technischen Problemstellung ist Gegenstand der Erfindung die Verwendung von vernetzter Kautschukmasse als ein- oder beidseitige Haftkleberbeschichtung auf einem bandförmigen Träger im Zuge der Herstellung eines Selbstklebebandes zur Bündelung von Kabeln in Kraftfahrzeugen, wobei der Kautschukmasse ein Vernetzungsmittel als Fotoinitiator hinzugefügt wird.

Mit Kautschuk bzw. der erfindungsgemäß eingesetzten Kautschukmasse werden wie üblich unvernetzte, aber vernetzbare Polymere mit gummielastischen Eigenschaften bei Raumtemperaturen bezeichnet. Im Rahmen der Erfindung kommt nun eine spezielle vernetzte Kautschukmasse bzw. Kautschukhaftklebemasse als Haftklebebeschichtung auf dem bandförmigen Träger zum Einsatz.

Dabei kann vorteilhaft als Kautschukmasse ein thermoplastischer Kautschuk auf Basis eines Styrol-Blockcopolymers eingesetzt werden. Ganz besonders bevorzugt sind Haftklebemassen auf Kautschukbasis zu nennen, deren Rezeptur auf einem Styrol-Blockcopolymer basiert, wie es beispielsweise von der Firma Shell unter dem Handelsnamen Kraton D-KX 222C vertrieben wird.

Durch eine Kombination des beschriebenen Blockcopolymers bzw. allgemein der Kautschukmasse mit Harzen, klebrigmachenden Tackifiern und einem oder mehreren systemgeeigneten Fotoinitiatoren kann ein anwendungsgerechter Haftklebestoff hergestellt werden, der sich vorteilhaft strahlenvernetzen lässt, und zwar insbesondere mit UV-Strahlen.

Die erfindungsgemäß eingesetzte thermoplastische Kautschukmasse, vorzugsweise auf Basis des Stryrol-Blockcopolymers kann von ihren Haftungseigenschaften her je nach eingesetztem Fotoinitiator und in Abhängigkeit von dessen Konzentration in der betreffenden Kautschukmasse zur Unterstützung der Strahlenvernetzung variabel eingestellt werden. Denn je nach Vernetzungsgrad lässt sich bei solchen Kautschuken eine Verbesserung der Klebeeigenschaften erreichen. Üblicherweise sorgt der der Kautschukmasse als Vernetzungsmittel hinzugefügte Fotoinitiator dafür, dass (unter Bestrahlung mit UV-Licht) eine Vielfalt fotochemischer Transformationen in der Kautschukmasse auftritt. So kann der Fotoinitiator z. B. reaktive Fragmente freier Radikale bilden, welche die Vernetzung der Kautschukmasse bzw. deren Polymerisation begünstigen. Dabei erhöht eine größere Konzentration des oder der Fotoinitiatoren naturgemäß die Vernetzungsdichte in der Kautschukmasse.

Es hat sich allgemein bewährt, wenn der Fotoinitiator bzw. die mehreren Fotoinitiatoren in der Kautschukmasse zu mehr als einem Gew.-% vorliegen, wobei eine bevorzugte Zusammensetzung 2 bis 20 Gew.-% des Fotoinitiators, bezogen auf die Kautschukmasse, enthält. Ganz besonders bevorzugt ist eine Zusammensetzung, in welcher 2 bis 15 Gew.-%, insbesondere 2 bis 7 Gew.-%, des Fotoinitiators in der Kautschukmasse vorhanden sind.

Als Fotoinitiatoren eignen sich solche auf Basis von Benzophenonen sowie ggf. einem Amin respektive solche, wie sie in der DE 699 16 245 T2 beispielhaft beschrieben werden (vgl. dort den Abschnitt [0024]). - Als besonders vorteilhaft haben sich an dieser Stelle Fotoinitiatoren der Firma Ciba erwiesen, die unter dem Handelsnamen IRGACURE vertrieben werden. Hierbei handelt es sich um hochreaktive Benzyl-dimethyl-ketale.

Darüber hinaus empfiehlt es sich, mit Fotoinitiatoren zu arbeiten, die nicht auf Sonnenlicht und nicht auf das Spektrum von Leuchtstofflampen reagieren. Denn durch beide Strahlenquellen kann eine unkontrollierte Nachvernetzung erfolgen. Man setzt deshalb Fotoinitiatoren ein, die bei Wellenlängen ≤ 400 nm empfindlich sind. Denn für die Vernetzung wird hauptsächlich auf UV-Lampenquellen zurückgegriffen und hier meistens auf so genannte Quecksilber-Strahler, welche mit besonderer Intensität im für die Vernetzungsreaktion wichtigen Wellenlängenbereich von 250 nm bis 400 nm strahlen.

Wenn dieses UV-Licht auf die zu vernetzende Kautschukmasse mit dem eingebrachten Fotoinitiator trifft, so werden durch die UV-Belichtung die zuvor bereits angesprochenen Fotoinitiatoren aufgespalten, die dann eine Polymerisation und als Folge hiervon die gewünschte Vernetzung starten, welche den Erweichungs- und Schmelzpunkt der Kautschukmasse erhöht. Aus diesem Grund spricht man auch davon, dass die Kautschukmasse strahlenchemisch vernetzt wird. - Immer lässt sich die erfindungsgemäß eingesetzte thermoplastische Kautschukmasse auf bspw. Basis des Styrol-Blockcopolymers von ihren Haftungseigenschaften her je nach eingesetztem Fotoinitiator und dessen Gewichtsanteil in der Kautschukmasse zur Unterstützung der Strahlenvernetzung variabel einstellen.

Das ist bei vernetzenden Acrylat-Haftklebstoffen nur in geringem Maße möglich. Denn eine Beeinflussung des Grades der Vernetzung geht mit einem erhöhten Molekulargewicht einher und gelingt nur in geringem Maße. Tatsächlich ist bei solchen Acrylat-Haftschmelzklebstoffen der angesprochene Fotoinitiator chemisch im Polymer gebunden und lässt sich daher nicht nach Art und Konzentration variieren und folglich an den betreffenden Anwendungsfall anpassen. Dadurch sind die Hafteigenschaften mehr oder minder fix vorgegeben (vgl. EP 0 937 761 B1).

Demgegenüber lässt sich die erfindungsgemäß eingesetzte vernetzte bzw. strahlenvernetzte Kautschukhaftklebemasse durch den Einsatz variabler und folglich verschiedener Fotoinitiatoren von ihrem Vernetzungsgrad her im Hinblick auf die Haftungseigenschaften in einem weiten Bereich einstellen und somit an den zu verarbeitenden Untergrund (die zu bündelnden Kabel) optimal anpassen. Das gilt erst recht vor dem Hintergrund, dass die Zugabe an Fotoinitiatoren gewichtsmäßig im Vergleich zu der Kautschukhaftklebemasse im Rahmen der angegebenen Gewichtsanteile variiert werden kann, wozu eine ebenfalls veränderliche Vernetzungsdichte korrespondiert. Hinzukommt erfindungsgemäß eine hohe Soforthaftung und folglich große Verarbeitungssicherheit, die von den Acrylathaftklebstoffen im Stand der Technik nach der EP 0 937 761 B1 nicht geliefert werden kann.

Zur Verarbeitung der beanspruchten Kautschukmasse bzw. Kautschukhaftklebemasse kann diese als sogenanntes Hot-Melt bzw. Klebstoffschmelze in niedrig viskosem Zustand auf den bandförmigen Träger aufgebracht werden. Anschließend erfolgt eine strahlenchemische Vernetzung der Kautschukmasse mittels ultravioletter Bestrahlung. Genauso gut ist eine Verarbeitung der Kautschukmasse als Polymerdispersion aus einer wässrigen- bzw. Lösemittelphase heraus mit anschließendem Trocknungsprozess und darauf folgender Vernetzung bzw. Strahlenvernetzung denkbar und wird umfasst.

Durch den Einsatz der vernetzten bzw. strahlenvernetzten Kautschukmasse anstelle des acrylatbasierten Klebers bei der EP 0 937 761 B1 wird bereits ein deutlicher Kostenvorteil erreicht, weil die betreffenden Kautschukmassen in großer Menge und zu geringen Preisen zur Verfügung stehen. Gleichzeitig wird durch die Strahlenvernetzung der Kautschukmasse die Temperaturstabilität erhöht. Hier empfiehlt die Erfindung, die Kautschukmasse mit Hilfe der bereits angesprochenen allgemein elektromagnetischen Strahlen, insbesondere UV-Strahlen, zu vernetzen. Das kann ergänzend im Zuge des beschriebenen strahlenchemischen Prozesses durchgeführt werden.

Es hat sich als günstig erwiesen, wenn die Kautschukmasse als Hot-Melt- bzw. Polymerschmelze in dem niedrig viskosen Zustand auf den Träger aufgebracht wird und anschließend einer (strahlenchemischen) Vernetzung unterzogen wird. Denn dadurch kann auf zusätzliche Lösungsmittel verzichtet und insgesamt die Handhabung vereinfacht werden. Die Abwesenheit eines zugehörigen Verdünnungs-/ Transportmediums führt also zu besonderen ökonomischen und ökologischen Vorteilen, wenngleich grundsätzlich auch eine Aufbringung als Dispersion möglich ist und umfasst wird, wie dies bereits beschrieben wurde.

In allen Fällen führt die beschriebene Strahlenvernetzung zu einer chemischen Vernetzung in der Molekülstruktur des eingesetzten Polymers und damit zu einer Erhöhung des Molekulargewichtes. Damit einher geht eine starke Erhöhung der Kohäsion des Haftklebestoffes selbst bei Temperaturen von über 125°C, sogar noch bei Temperaturen über 160°C. Folglich erklärt sich die erhöhte Haftfähigkeit bei diesen Temperaturen infolge der gesteigerten Vernetzung.

Im Übrigen besitzt die erfindungsgemäß eingesetzte vernetzte Kautschukmasse durch den beschriebenen Vernetzungsvorgang quasi keinen Erweichungspunkt mehr. Das eingangs beschriebene und für die Anwendungen im Automobilbereich möglicherweise nachteilige viskose Fliessverhalten bei höheren Temperaturen liegt also nicht mehr vor, so dass sich die Anwendung der betreffenden Kautschukmasse für den angegebenen Zweck erklärt. Im Übrigen führt die strahlenchemische Vernetzung zu einer wesentlich besseren Stabilität der Kautschukhaftklebemasse gegenüber aggressiven Medien wie z. B. Motoröl, Benzin und dergleichen, so dass sie hierdurch nochmals für die beanspruchte Verwendung besonders geeignet ist.

Außerdem hat sich herausgestellt, dass Weich-PVC-Fahrzeugkabelumhüllungen bzw. allgemeine Ummantelungen mit einem hohen Gehalt an Monomerweichmachern (z. B. DOP) im Kraftfahrzeugbereich bei Fahrzeugleitungssätzen eingesetzt werden. Diese Monomerweichmacher zeigen eine ausgeprägte Tendenz, in die Klebstoffe der zur Bündelung der Fahrzeugleitungssätze bzw. Kabel eingesetzten Klebebänder zu migrieren und diese aufzuweichen. Als Folge hiervon verlieren die Klebstoffe ihre Kohäsion, werden fließfähig und erfahren eine Beeinträchtigung in ihren Haftungseigenschaften.

Auch unter Berücksichtigung dieser Prämisse zeigen die beschriebenen vernetzten und erfindungsgemäß eingesetzten Kautschukmassen deutliche Vorteile. Denn das nach der chemischen Vernetzung vorliegende polymere Netzwerk, in welches teilweise die beigemischten Harze und Tackifier integriert sind, verringert den beschriebenen Aufweichprozess deutlich, so dass die zu bündelnden Kabel auch noch nach Jahren einwandfrei zusammengefasst sind. - Als Harze können beispielhaft und nicht einschränkend Naturharze und/oder aromatische sowie aliphatische Kohlenwasserstoffharze Verwendung finden.

Hinzu kommt, dass im Gegensatz zu den in der EP 0 937 761 B1 beschriebenen UV-vernetzten Acrylathaftschmelzklebstoffen die strahlenchemische Vernetzung von Kautschukklebemassen wesentlich prozesssicherer ist. Das lässt sich darauf zurückführen, dass etwaige Schwankungen in der Strahlungsenergie während der Vernetzung die erreichten Haftwerte und thermischen Stabilitäten der solchermaßen vernetzten Kautschukmasse wesentlich weniger beeinflussen als dies bei vernetzten Acrylathaftschmelzklebstoffen der Fall ist. Ferner sorgt die im Vergleich zu Acrylathaftklebstoffen unpolare Struktur der vernetzten Kautschukmassen auch für eine sichere Haftung auf unpolaren Kabelummantelungen, ist also für allgemeine Anwendungen besonders geeignet.

Gerade auf den in der Automobilindustrie immer mehr eingesetzten Fahrzeugleitungen mit unpolarer strahlenvernetzter Polyethylen- und Polypropylen-Ummantelung bzw. allgemein Polyolefin-Ummantelung werden durch diesen Umstand vergleichsweise hohe Haftwerte erzielt. Ein Ablösen der erfindungsgemäßen Klebebänder ist selbst nach jahrelangem Einsatz nicht zu erwarten. Hierdurch sind die beschriebenen Selbstklebebänder für den Einsatz bei der Bündelung von Leitungen mit einer Weich-PVC-Ummantelung und/oder einer vernetzten Polyolefin-Ummantelung prädestiniert.

Als Träger für die Herstellung des Selbstklebebandes empfiehlt die Erfindung den Rückgriff auf einen Gewebe-, Vlies-, Folien-, Papier- oder Filzträger, wobei selbstverständlich auch Kombinationen der genannten Materialien als Trägerwerkstoff fungieren können. Beispielsweise ist ein kombinierter Gewebe-/Vliesträger ebenso denkbar wie ein Papier-/Folienträger. Darüber hinaus ist eine Bearbeitung des Trägers zumindest auf der Seite denkbar, auf die anschließend die Kautschukmasse als Hot-Melt- bzw. Polymerschmelze aufgebracht wird. So kann die betreffende Trägerbandseite glattgeschliffen bzw. gechintzt werden, um eine möglicht geschlossene Oberfläche zur Verfügung zu stellen, damit der in den niedrigviskosen Zustand überführte Kleber bzw. die Kautschukmasse nicht in den Träger eindringen kann und der Kleberverbrauch gering ist. Ein solcher gechintzter Träger und dessen Herstellung werden beispielhaft in der WO 03/033 611 A1 beschrieben.

Darüber hinaus mag das Selbstklebeband flammhemmend ausgebildet sein, indem in die Kautschukmasse und/oder in den Träger flammhemmende Zusätze eingebracht werden. Dadurch wird der Einsatz des beschriebenen Selbstklebebandes für die automobilen Anwendungen nochmals verbessert.

Schließlich zeichnet sich das beschriebene Selbstklebeband dadurch aus, dass dieses insgesamt foggingarm ausgebildet ist. Bekanntermaßen beschreibt Fogging die Kondensation von flüchtigen Bestandteilen aus dem Selbstklebeband, die beispielsweise im Fahrzeuginneren zu unerwünschten Niederschlägen an Glasscheiben, insbesondere der Windschutzscheibe, führen. Um dadurch bedingte ungünstige Beleuchtungsverhältnisse auszuschließen, ist das beschriebene Selbstklebeband foggingarm ausgestaltet und insgesamt mit einem Foggingwert < 5 mg, vorzugsweise < 2 mg, gemessen in Übereinstimmung mit der VW-Norm PV 3015 ausgebildet.

Im Rahmen dieser von der Firma VW AG vorgegebenen Norm PV 3015, welche der DIN-Norm 75201 B entspricht, wird das beschriebene Selbstklebeband in einen Becher oder ein vergleichbares Behältnis gegeben, wobei der Becherrand mit einer Aluminiumfolienscheibe abgedeckt ist. Der Becher wird nun in ein beheiztes Bad mit einer Temperatur von 100 ± 0,5°C für die Dauer von 16 Stunden ± 10 min eingebracht.

Zuvor wird die auf den Becherrand aufgebrachte Aluminiumfolienscheibe gewogen. Das gleiche geschieht nach dem Befoggen dieser Aluminiumfolienscheibe am Ende des Prüfzeitraums von 16 Stunden ± 10 min, woraus ein zweites Gewicht für die nun bedampfte Aluminiumfolienscheibe resultiert. Die Bedampfung erklärt sich dabei aus Rückständen, die das Klebeband bei den angegebenen Temperaturen verlassen und möglichst gering sein sollen, um die beschriebene Foggingarmut zu erreichen.

Die Differenz der beiden Gewichte beträgt erfindungsgemäß weniger als 5 mg, vorzugsweise weniger als 2 mg, und gibt folglich die Menge an Kondensat wieder, die sich an der Aluminiumfolienscheibe niedergeschlagen hat.

Auch andere Prüfmethoden für die Bestimmung des Fogging-Wertes sind grundsätzlich denkbar. Diese basieren beispielsweise auf der von der Firma Ford beschriebenen "Ford Laboratory Test Method", die im Detail in der US-PS 5 681 654 sowie der EP 0 937 761 B1 beschrieben werden. In beiden Fällen wird letztlich die Lichtdurchlässigkeit einer Glasplatte bestimmt und deren Änderung durch das aufgedampfte Kondensat.

## Patentansprüche

1. Verwendung von vernetzter Kautschukmasse als ein- oder beidseitige Haftkleberbeschichtung auf einem bandförmigen Träger im Zuge der Herstellung eines Selbstklebebandes zur Bündelung von Kabeln in Kraftfahrzeugen, wobei der Kautschukmasse ein Vernetzungsmittel als bei Wellenlängen ≤ 400 nm empfindlicher Fotoinitiator hinzugefügt wird.

2. Verwendung nach Anspruch 1, **dadurch gekennzeichnet, dass** als Kautschukmasse ein thermoplastischer Kautschuk auf Styrol-Blockcopolymerbasis eingesetzt wird.

3. Verwendung nach Anspruch 1 oder 2, **dadurch gekennzeichnet, dass** die Kautschukmasse als Dispersion oder als Hot-Melt- bzw. Polymerschmelze in niedrig viskosem Zustand auf den Träger aufgebracht wird.

4. Verwendung nach einem der Ansprüche 1 bis 3, **dadurch gekennzeichnet, dass** die Kautschukmasse mit UV-Strahlen strahlenvernetzt wird.

5. Verwendung nach einem der Ansprüche 1 bis 4, **dadurch gekennzeichent, dass** der Träger als Gewebe-, Vlies-, Folien-, Papier-, Filzträger oder Kombinationen der vorgenannten Materialien aufgebaut ist.

6. Verwendung nach einem der Ansprüche 1 bis 5, **dadurch gekennzeichnet, dass** das Selbstklebeband foggingarm mit einem Foggingwert < 5 mg, vorzugsweise < 2 mg, gemessen in Übereinstimmung mit der VW-Norm PV 3015 ausgebildet ist.

7. Verwendung nach einem der Ansprüche 1 bis 6, **dadurch gekennzeichnet, dass** das Selbstklebeband flammhemmend ausgerüstet ist.

8. Verwendung nach einem der Ansprüche 1 bis 7, **dadurch gekennzeichnet, dass** das Selbstklebeband auf der der Haftkleberbeschichtung abgewandten Seite eine Lackbeschichtung aufweist.

9. Verwendung nach einem der Ansprüche 1 bis 8, **dadurch gekennzeichnet, dass** der bandförmige Träger einseitig oder beidseitig glattgeschliffen bzw. gechintzt ist.

10. Verwendung nach einem der Ansprüche 1 bis 9, **dadurch gekennzeichnet, dass** das Selbstklebeband zur Bündelung von Leitungen mit einer Weich-PVC-Ummantelung und/oder einer vernetzten Polyolefin-Ummantelung eingesetzt wird.

## Claims

1. Use of a crosslinked rubber compound as pressure-sensitive adhesive coating on one or both sides of a tape-type carrier in the course of the production of a self-adhesive tape for bundling cables in motor vehicles, a crosslinking agent being added to the rubber compound as photoinitiator sensitive at wavelengths of ≤ 400 nm.

2. Use according to claim 1 **characterised in that** a thermoplastic rubber based on styrene block copolymer is used as rubber compound.

3. Use according to claim 1 or 2 **characterised in that** the rubber compound is applied onto the carrier as a dispersion or as hot melt or polymer melt in a state of low viscosity.

4. Use according to one of claims 1 to 3 **characterised in that** the rubber compound is radiation crosslinked using UV radiation.

5. Use according to one of claims 1 to 4 **characterised in that** the carrier is built up as a woven carrier, non-woven carrier, film carrier, paper carrier, felt carrier or combinations of the previously mentioned materials.

6. Use according to one of claims 1 to 5 **characterised in that** the self-adhesive tape is formed low fogging with a fogging value of < 5 mg, preferably < 2 mg, measured in agreement with the VVV standard PV 3015.

7. Use according to one of claims 1 to 6 **characterised in that** the self-adhesive tape is made to be fire-retardant.

8. Use according to one of claims 1 to 7 **characterised in that** the self-adhesive tape has a varnish coating on the side facing away from the self-adhesive coating.

9. Use according to one of claims 1 to 8 **characterised in that** the tape-type carrier is smoothly ground and/or chintzed on one or both sides.

10. Use according to one of claims 1 to 9 **characterised in that** the self-adhesive tape is used for bundling cables with a flexible sheathing and/or a crosslinked polyolefin sheathing.

## Revendications

1. Utilisation d'une masse de caoutchouc réticulée comme auto-adhésif pour revêtir soit une face soit les deux faces d'un support en forme de ruban, dans le cadre de la fabrication d'un ruban auto-adhésif destiné à regrouper en faisceau des câbles dans des véhicules à moteur, un agent de réticulation étant ajouté à ladite masse de caoutchouc, ledit agent servant de photoinitiateur sensible à des longueurs d'onde ≤ 400 nm.

2. Utilisation selon la revendication 1, **caractérisée en ce qu'**un caoutchouc thermoplastique à base de copolymères blocs de styrène est mis en oeuvre en tant que masse de caoutchouc.

3. Utilisation selon les revendications 1 ou 2, **caractérisée en ce que** la masse de caoutchouc est appliquée sur le support sous forme d'une dispersion ou d'une masse thermofusible et/ou d'une masse fondue de polymères.

4. Utilisation selon les revendications 1 à 3, **caractérisée en ce que** la masse de caoutchouc est réticulée en la soumettant à un rayonnement.

5. Utilisation selon les revendications 1 à 4, **caractérisée en ce que** le support est réalisé sous forme d'un support en tissu, en non-tissé, en papier, en feutre ou réalisé à partir d'une combinaison des matériaux précités.

6. Utilisation selon les revendications 1 à 5, **caractérisée en ce que** le ruban auto-adhésif est réalisé de façon à ce sa valeur d'embuage, mesurée conformément à la norme Volkswagen PV 3015, soit inférieure à 5 mg, de préférence inférieure à 2 mg.

7. Utilisation selon les revendications 1 à 6, **caractérisée en ce que** le ruban auto-adhésif comporte un apprêt ignifuge.

8. Utilisation selon les revendications 1 à 7, **caractérisée en ce que** le ruban auto-adhésif comporte, sur la face qui se trouve à l'opposé de celle qui porte le revêtement, un revêtement de vernis.

9. Utilisation selon les revendications 1 à 8, **caractérisée en ce que** le support en forme de ruban a subi, sur une face ou sur les deux faces, un traitement de polissage ou chintz.

10. Utilisation selon les revendications 1 à 9, **caractérisée en ce que** le ruban auto-adhésif est mis en oeuvre pour regrouper en faisceau des lignes avec une gaine en PVC souple et/ou une gaine en polyoléfines réticulées.
